# EUROPÄISCHE PATENTSCHRIFT

(11) **EP 0 816 303 B1**
(45) Veröffentlichungstag und Bekanntmachung des Hinweises auf die Patenterteilung: **25.11.1998**
(21) Anmeldenummer: 97108976.8
(22) Anmeldetag: 04.06.1997
(51) Int. Cl.: C04B 28/10, C04B 38/10, B28C 5/38

(54) **Verfahren zur Herstellung einer leichten, offenporigen, mineralischen Dämmplatte**
A method of producing lightweight insulating mineral sheets with open porosity
Procédé de fabrication de plaques à structure cellulaire consistant en matériau léger et isolant

(30) Priorität: 04.07.1996 DE 19626953
(43) Veröffentlichungstag der Anmeldung: 07.01.1998
(73) Patentinhaber: Hebel Aktiengesellschaft, D-82275 Emmering (DE)
(72) Erfinder: Falke, Silke, 03238 Finsterwalde (DE); Frey, Emmo, Dr., 85221 Dachau (DE); Koerdt, Frithjof, 03253 Schönborn (DE)
(74) Vertreter: Liebau, Gerhard, Dipl.-Ing.

(56) Entgegenhaltungen:
- EP-A- 0 428 756
- EP-A- 0 673 733
- FR-A- 2 593 497

## Beschreibung

Die Erfindung betrifft ein Verfahren zur Herstellung einer leichten, porösen, mineralischen Dämmplatte mit einer Rohdichte unter 130 kg/m³.

Seit einiger Zeit sind Bestrebungen im Gange, Verfahren zur Herstellung einer leichten, porösen, mineralischen Dämmplatte mit möglichst geringer Rohdichte zu entwickeln, damit derartige Dämmplatten als Ersatz für geschäumte Polystyrol-Platten oder Mineralfaserplatten als Vollwärmeschutz für Gebäude eingesetzt werden können. So beschreibt die DE 43 39 137 Al ein Verfahren zur Herstellung von Wärmedämmaterial aus silikathaltigem Material, Kalkhydrat, Wasser, Schaum und einem reaktive Aluminate enthaltenden Schnellzement. Um sehr geringe Rohdichten zu erreichen, ist vorgesehen, daß als silikathaltiges Material ein Quarzmehl mit einer spezifischen Oberfläche nach BET von mindestens etwa 3 m²/g, insbesondere etwa 4-5 m²/g, verwendet wird, die Rohmischung mit einem Gewichtsverhältnis von Wasser/Feststoff (ohne Schaum) von mindestens etwa 1,25 und einer in bezug auf den praktischen vollständigen Umsatz des Quarzmehls und der reaktiven Aluminate im wesentlichen stöchiometrischen Menge an Kalkhydrat mit einer Oberfläche nach BET von mindestens etwa 15 m²/g hergestellt wird und die in Formen gegossenen Rohlinge nach genügender Verfestigung bis auf einen Formboden entformt und auf dem Formboden befindlich autoklaviert werden. Bei Durchführung dieses Verfahrens wird zunächst aus einem derartigen Quarzmehl, Kalkhydrat und Wasser eine Wasser/Feststoff-Suspension in einem ersten Mischer hergestellt. In einem separaten Schaumerzeuger wird ein Proteinschaum mit einer Schaumrohdichte im Bereich von etwa 60-80 kg/m³ erzeugt, der dann in dem ersten Mischer untergemischt wird. In einem zweiten Mischer wird eine Schnellzement-Suspension angemischt, die dann nach dem Untermischen des Schaumes unter die Wasser/Feststoff-Suspension in den ersten Mischer eingebracht und unter die vorher hergestellte Mischung untergemischt wird. Die so hergestellte Rohmischung wird dann in Formen gegossen. Nach genügender Verfestigung der Masse wird bis auf den Formboden entformt. Der auf dem Formboden befindliche Block wird dann noch während ca. 6 Stunden vorgelagert und dann weiterhin auf dem Formboden befindlich in den Autoklaven eingeführt und dort dampfgehärtet, da er ohne Verbleiben auf dem Formboden für eine Handhabung zu fragil ist. Anschließend können die dampfgehärteten Blöcke in Plattenform geschnitten werden. Da das Material jedoch ausgehärtet ist, sind hierzu spezielle rotierende oder hin- und herbewegte Schneidwerkzeuge erforderlich. Ein Schneiden mit gespannten Drähten, wie dies bei Schaum- oder Porenbeton üblicherweise im "grünen" Zustand an dem noch plastischen Block erfolgt, ist bei diesem Verfahren nicht möglich, da der Block im grünen Zustand für jegliche Handhabung ohne Formboden zu fragil ist. Die Verwendung von zwei Mischern zur Herstellung der Rohmischung und das Schneiden des Blockes im ausgehärteten Zustand verteuert dieses bekannte Verfahren. Außerdem ist das nach diesem Verfahren hergestellte Wärmedämmaterial nicht wasserabweisend.

In der DE 43 27 074 A1 ist ein Verfahren zur Herstellung einer mineralischen Leicht-Dämmplatte aus Schaumbeton bekannt, bei dem in einem stationären Rührbehälter mit Paddelrührwerk Wasser, Quarzmehl, Kalkhydrat und Zement eingegeben werden. Diese in den Mischbehälter eingegebene Mischung wird zunächst mittels einer Kreiselpumpe durch einen Kolloidalmischer im Kreislauf 5 bis 10 Minuten umgepumpt, um dadurch eine homogene Bindemittelschlämme zu bilden. Anschließend werden 6 bis 12 mm lange Glasfasern in den Rührbehälter eingebracht und mittels des Paddelrührwerks in die Bindemittelschlämme eingemischt. In einem Schaumerzeuger wird aus Wasser, Luft und einem Porenbildner Schaum erzeugt und bei stillstehendem Paddelrührwerk in den Rührbehälter eingebracht, bis dieser randvoll gefüllt ist. Durch Drehung des Paddelrührwerkes wird der Schaum etwa 3 Minuten lang in die glasfaserenthaltige Bindemittelschlämme eingemischt und die Rohmischung mittels der Kreiselpumpe und einer Mörtelpumpe, die vom Typ her ein Schneckenförderer bzw. eine sogenannte Walkpumpe ist, in eine Form gefüllt. Nach dem Ansteifen des Schaumbeton-Blockes werden die Formwände entfernt und der Schaumbeton-Block in einzelne Leicht-Dämmplatten geschnitten. Diese werden dann in einem Autoklaven ausgehärtet und in einem zusätzlichen Verfahrensschritt mit einer Beschichtung zur Oberflächenhärtung versehen. Der apparative Aufwand zur Herstellung der Mischung ist groß, denn außer dem Paddelrührwerk sind eine Kreiselpumpe, ein Kolloidalmischer und eine Mörtelpumpe erforderlich. Die Mischzeiten sind verhältnismäßig lang und außerdem ist eine Oberflächenhärtung in einem separaten Arbeitsgang erforderlich. Trotz dieses maschinellen und zeitlichen Aufwandes und trotz der Verwendung von Glasfasern, welche die Herstellung verteuern und zu Problemen bei dem Schneiden des Schaumbeton-Blockes und bei der Verarbeitung der Leicht-Dämmplatten führen, konnten die für einen bedenkenlosen Einsatz in der Praxis erforderlichen Produkteigenschaften nicht erreicht werden. Die nach diesem Verfahren hergestellten Leicht-Dämmplatten hatten nämlich hinsichtlich Festigkeit, Wärmedämmfähigkeit und wasserabweisenden Verhalten nicht die erforderlichen Eigenschaften. (Dies stellt die Anmelderin des DE 43 27 074 A1 in ihrer späteren Patentanmeldung DE 44 08 088 A1, Spalte 2, Zeilen 39 bis 54 selbst fest.)

Aus der DE 44 08 088 A1 ist ein Verfahren zur Herstellung einer porösen, mineralischen Leicht-Dämmplatte bekannt, bei welchem zunächst in einem Kolloidalmischer eine Bindemittelschlämme aus Zement, Quarzmehl, Kalkhydrat und Wasser hergestellt wird. Unter Zwischenschaltung einer Förderpumpe wird die Bindemittelschlämme über eine erste Speiseleitung einem Y-förmigen Mischrohr zugeführt und in diesem mit Schaum vermischt, der vorher in einer Schaumkanone erzeugt wurde und über eine zweite Speiseleitung dem Mischrohr zugeführt wird. Die durch das Vermischen der beiden vorgenannten Komponenten im Mischrohr hergestellte Schaumbetonmasse wird dann weiter durch einen Statikmischer gefördert, wo eine Homogenisierung der Schaumbetonmasse erfolgen soll. Die Schaumbetonmasse wird dann in einen Formkasten ausgebracht. Nach dem Ansteifen der Schaumbetonmasse werden die Formwände entfernt. Der auf dem Formboden freistehende plastische Block wird dann mittels gespannter Drähte in Dämmplatten geschnitten. Mittels eines Vakuumgreifers werden die Dämmplatten vom Bodenblech abgehoben, auf einen Härtewagen gesetzt und schließlich auf diesem in einem Autoklaven gehärtet. Anschließend erfolgt durch einen zusätzlichen Arbeitsgang die Imprägnierung der Platten in einem Imprägnierungsbad auf der Basis von modifiziertem Wasserglas, einem Hydrophobiermittel und Wasser. Durch das Imprägniermittel soll die Oberfläche der Dämmplatten gehärtet und ein wasserabweisender Effekt erzielt werden. Auch hier ist der apparative Aufwand zur Durchführung des Verfahrens verhältnismäßig hoch, denn es sind zwei verschiedene Mischer, ein Mischrohr und außerdem auch noch eine Förderpumpe erforderlich. Ferner sind zur Hydrophobierung ein Tauchbecken mit Unterdruckkammer und eine Trockenstation erforderlich. Mit einem Statikmischer läßt sich außerdem keine ausreichend homogene Verteilung des Schaumes in der Rohmischung erreichen.

Der Erfindung liegt die Aufgabe zugrunde, ein Verfahren zur Herstellung einer leichten, offenporigen, mineralischen Dämmplatte mit einer Rohdichte unter 130 kg/m³ anzugeben, mit dem sich mit verhältnismäßig geringem maschinellen und verfahrenstechnischem Aufwand Dämmplatten herstellen lassen, die sehr gute Wärmedämmungseigenschaften und eine verhältnismäßig hohe Festigkeit, insbesondere hohe Zugfestigkeit aufweisen, und die hydrophobiert sind.

Diese Aufgabe wird durch ein Verfahren mit folgenden Schritten gelöst:
a) Herstellen einer Wasser/Feststoff-Suspension durch intensives Mischen der nachstehenden Rohstoffe in einem Intensiv-Mischer mit drehendem Mischgutbehälter und mit hoher Drehzahl rotierendem Mischwerkzeug unter Verwendung von Wasser und, jeweils bezogen auf den Gesamtfeststoffgehalt, 40 bis 48 M.-% (Masse - Prozent) Quarzmehl mit einer spezifischen Oberfläche nach BET von mindestens 2,5 m²/g, 15 bis 20 M.-% Kalkhydrat mit einer spezifischen Oberfläche von mindestens 15 m²/g, 25 bis 35 M.-% Zement, 0,3 bis 0,5 M.-% Hydrophobiermittel, Rest Additive, wobei das Verhältnis von Zement zu Kalkhydrat 1,5 bis 2,3 : 1 beträgt, der Bindemittelanteil im Bereich von 45 bis 52 M.-% liegt und die Suspension einen Wasser/Feststoff-Faktor (ohne Schaum) von 0,7 bis 1,2 aufweist,
b) Bereitstellen eines Schaumes aus Wasser, Luft und einem Porenbildner mit einer Rohdichte von 40 bis 50 kg/m³,
c) Einleiten des Schaumes in die noch im Mischgutbehältnis befindliche Wasser/Feststoff-Suspension bei laufendem Intensiv-Mischer und Untermischen des Schaumes bei niedriger Drehzahl des Mischwerkzeuges in maximal 120 Sekunden,
d) Eingießen der Rohmischung in mindestens eine Form,
e) Ansteifenlassen der Rohmischung zu einem noch plastischen Block mit ausreichender Grünstandsfestigkeit,
f) Anheben des plastischen Blockes vom Formboden mittels Vakuum,
g) Schneiden des Blockes mittels Drähten in einzelne Dämmplatten und
h) Härten der Dämmplatten in einem Autoklaven.

Mit dem erfindungsgemäßen Verfahren ist die Herstellung von leichten, offenporigen, mineralischen Dämmplatten mit einer Rohdichte unter 130 kg/m³ bis etwa 100 kg/m³ exakt reproduzierbar möglich. Der maschinelle Aufwand hierfür konnte hauptsächlich dadurch verringert werden, daß zur Herstellung der Rohmischung nur ein einziger Mischer erforderlich ist, nämlich ein Intensiv-Mischer mit drehendem Mischgutbehälter und einem mit unterschiedlichen Drehzahlen antreibbaren Mischwerkzeug, das zweckmäßig exzentrisch zur Drehachse des Mischgutbehälters angeordnet ist. Die Herstellung der Wasser/Feststoff-Suspension und auch die Schaumzugabe bei gleichzeitigem Unterrühren des Schaumes erfolgt in ein und demselben Intensiv-Mischer. Der drehende Mischgutbehälter mit variabel antreibbaren Mischwerkzeug ermöglicht eine freie Materialbewegung mit einer optimalen Homogenisierung innerhalb kürzester Mischzeiten. Dabei ist es wesentlich, daß das Hydrophobiermittel durch das mit hoher Drehzahl rotierende Mischwerkzeug intensiv und gleichmäßig im Wasser und in der Wasser/Feststoff-Suspension verteilt wird, bevor die Zugabe des vorbereiteten Schaumes erfolgt. Damit dann beim Untermischen des Schaumes dieser nicht durch das Hydrophobiermittel teilweise zerstört wird, muß das Untermischen in möglichst kurzer, jedoch für eine homogene Verteilung des Schaumes in der Rohmischung ausreichender Zeit von maximal 120 Sekunden erfolgen, wobei durch das mit niedriger Drehzahl angetriebene Mischwerkzeug eine schonende, homogene Untermischung des Schaumes in die Wasser/Feststoff-Suspension ohne Zerstörung des Schaumes erreicht wird. Die Rohmischung mit der Zusammensetzung innerhalb der angegebenen Bereiche hat den Vorteil, daß sie innerhalb einer angemessenen Reifezeit zu einem noch plastischen Block mit ausreichender Grünstandsfestigkeit verfestigt, der nicht nur vom Formboden mittels Vakuum abgehoben werden kann, sondern auch im grünen Zustand mittels gespannter Schneiddrähte geschnitten werden kann. Aufgrund der angegebenen Rezeptur hat der plastische Block die für das Schneiden in grünem Zustand ausreichende Festigkeit. Außerdem haben die fertigen Dämmplatten nach dem Autoklavieren eine verhältnismäßig hohe Druck- und Biegezugfestigkeit, so daß eine nachträgliche Härtung in einem flüssigen Härtungsmittel entfallen kann. Um diese Festigkeiten zu erreichen sind auch keine Glasfasern erforderlich, so daß die bei Verwendung dieser Glasfasern entstehenden Probleme entfallen. Bei der Verwendung von Portlandzement lassen sich auch hohe Zugfestigkeiten erreichen. Ferner sind die fertigen Dämmplatten nach dem Autoklavieren ohne zusätzliche Imprägnierbehandlung durch und durch, d. h. nicht nur im Oberflächenbereich, hydrophobiert und behalten deshalb ihre hydrophobe Eigenschaft auch nach dem Aufteilen in kleinere Plattenabschnitte.

Vorteilhafte Durchführungsmöglichkeiten des erfindungsgemäßen Verfahrens sind in den Unteransprüchen angegeben.

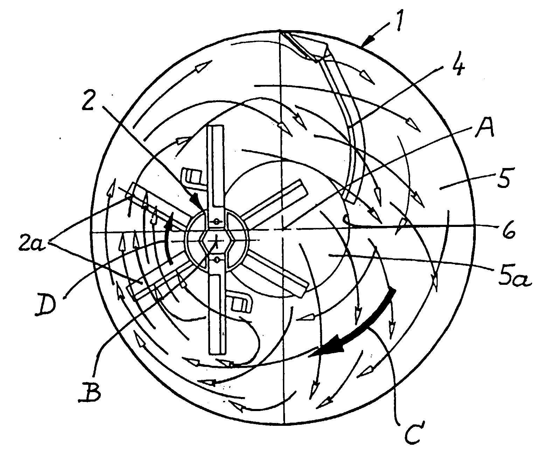

In der Zeichnung ist der zur Durchführung des erfindungsgemäßen Verfahrens verwendete Intensiv-Mischer in Draufsicht schematisch dargestellt.

Bei der Durchführung des erfindungsgemäßen Verfahrens wird als SiO₂-Träger ein sehr feines Quarzmehl mit einer spezifischen Oberfläche nach BET von mindestens 2,5 m²/g, insbesondere 3 bis 5 m²/g, verwendet. Dieses Quarzmehl wird in einer Menge von 40 bis 48 M.-% eingesetzt.

Das eingesetzte Kalkhydrat hat eine spezifische Oberfläche von mindestens 15 m²/g. Die Menge an Kalkhydrat kann in einem Bereich von 15 bis 20 M.-% variiert werden. Alle vorgenannten M.-%-Angaben (Masse - Prozent - Angaben) beziehen sich auf den Gesamtfeststoffgehalt.

Die Verwendung von Portlandzement in einer Menge von 25 bis 35 M.-% als Zement-Rohstoff hat den Vorteil, daß Portlandzement relativ billig ist und die fertigen Dämmplatten hohe Zugfestigkeiten aufweisen. Die Rohmischung hat eine lange offene Verarbeitungszeit, so daß der Mischer nur bei längeren Stillstandszeiten zwischen den Mischvorgängen zu reinigen ist. Allerdings dauert es verhältnismäßig lange bis die Rohmasse nach dem Eingießen in die Form eine ausreichende Grünstandsfestigkeit erreicht hat. Diese lange Reifezeit kann jedoch durch eine größere Anzahl von Formen ausgeglichen werden, um eine ausreichende Produktionskapazität sicherzustellen.

Durch Verwendung von Schnellzement kann die Reifezeit wesentlich verkürzt und durch die Menge an Schnellzement auch die offene Verarbeitungszeit der Rohmischung beeinflußt werden. Bei sehr hohen Schnellzementanteilen erfolgt jedoch eine zu schnelle Abbindereaktion, bei zu geringen Anteilen ist hingegen die Grünstandsfestigkeit des plastischen Blockes ungenügend, so daß er nicht mit gespannten Schneiddrähten geschnitten werden kann. Schnellzement wird daher in einer Menge von 25 bis 35 M.-% eingesetzt. Aufgrund einer verhältnismäßig hohen Menge an Schnellzement steift die Rohmischung schon nach verhältnismäßig kurzer Zeit an und der plastische Block kann dann entschalt, mittels Vakuumgreifern transportiert und mittels gespannter Drähte geschnitten werden. Überraschenderweise hat sich gezeigt, daß trotz des hohen Anteiles an Schnellzement die fertigen Dämmplatten eine ausreichend hohe Druck- und Biegezugfestigkeit besitzen. Dieses Ergebnis war nicht zu erwarten, weil das im Schnellzement enthaltene Aluminat die Tobermorit-Bildung stört. Gegebenenfalls könnte auch eine Mischung von Portlandzement und Schnellzement verwendet werden.

Durch das Verhältnis von Schnellzement zu Kalkhydrat wird die offene Zeit im Mischer bis zur Beendigung des Eingießens in die Form eingestellt. Hierbei müß das Verhältnis von Schnellzement zu Kalkhydrat 1,5 bis 2,3 betragen. Wie bereits gesagt, wird durch die Erhöhung des Schnellzementanteiles die offene Zeit verringert.

Der Bindemittelanteil, also Kalkhydrat plus Zement, sollte im Bereich von 45 bis 52 M.-% liegen. Bei Bindemittelanteilen über 53% tritt ein Absinken der in die Form eingegossenen Rohmischung während des Ansteifens auf.

Bei dem erfindungsgemäßen Verfahren wird eine Massehydrophobierung durchgeführt, d. h. das Hydrophobiermittel wird direkt der Wasser/Feststoff-Suspension vor dem Untermischen des Schaumes zugegeben. Hierdurch entfällt das nachträgliche Hydrophobieren der autoklavierten Dämmplatten. Als Hydrophobiermittel wird ein handelsübliches Siliconöl in einer Menge von 0,3 bis 0,5 M.-%, vorzugsweise etwa 0,4 M.-% verwendet.

Außer Quarzmehl, welches mit einer mittleren Korngröße von etwa 3 µm und einer maximalen Korngröße von etwa 10 µm verwendet wird, Kalkhydrat, Zement und Hydrophobiermittel können bei der Herstellung der Wasser/Feststoff-Suspension auch Additive, wie Anhydrit, Silikate, Verflüssiger (zur Senkung der Viskosität) und Rückgut in einer Menge von etwa 5 M.-% verwendet werden, wobei der Anteil an Rückgut etwa 3 M.-% betragen kann. Unter Rückgut wird hier gehärtetes und durch Mahlen aufbereitetes Dämmaterial verstanden, das bei der Produktion in Form von Ausschuß und Abfällen entstehen kann.

Als Schaum wird Tensidschaum, vorzugsweise ein Proteinschaum, verwendet, wobei die Schaumrohdichte im Bereich von 40 bis 50 kg/m³ liegen sollte.

Die aus Wasser und den Feststoffen Quarzmehl, Kalkhydrat, Zement, Hydrophobiermittel und Additiven bestehende Wasser/Feststoff-Suspension sollte vor der Zugabe des Schaumes einen Wasser/Feststoff-Faktor von etwa 0,7 bis 1,1, vorzugsweise etwa 0,7 bis 0,9 haben. Mit abnehmendem Wasser/Feststoff-Faktor nimmt die Viskosität der Suspension ohne und insbesondere mit Schaum deutlich zu. Ebenfalls konnte eine Zunahme der Grünstandsfestigkeit festgestellt werden. Das Unterrühren des Schaumes wird mit abnehmendem Wasser/Feststoff-Faktor jedoch schwieriger. Andererseits sollte der Wasser/Feststoff-Faktor auch nicht vergrößert werden, da hierdurch die Gußstabilität verringert, die Ansteifungszeit verlängert und die Wassermenge im Block erhöht wird, was aus trocknungstechnischen Gründen nachteilig ist. Es wird daher ein Wasser/Feststoff-Faktor von 0,7 bis 0,9 empfohlen, da hier eine gute Homogenisierung beim Mischen und gute Produkteigenschaften erreicht werden.

Die Rezeptur setzt sich also wie folgt zusammen:
Quarzmehl 40 - 48 M.-%
Kalkhydrat 15 - 20 M.-%
Portlandzement 25 - 35 M.-%
Anhydrit etwa 2 M.-%
Rückgut etwa 3 M.-%
Siliconöl etwa 0,4 M.-%

Proteinschaum
Wasser
Wasser/Feststoff-Faktor 0,7 - 0,9

Für die Durchführung des Verfahrens wird ein bekannter Intensiv-Mischer verwendet, der in der Zeichnung schematisch dargestellt ist. Der Mischer besteht aus einem drehbaren, vorzugsweise um eine vertikale Achse A drehenden Mischgutbehälter 1 mit einem Fassungsvermögen von etwa 1000 Liter, der von einem eigenen Antriebsmotor mit einstellbarer Drehzahl antreibbar ist. In dem Mischgutbehälter ist ein Mischwerkzeug 2 mit einer Vielzahl von Mischflügeln 2a vorgesehen, die in mehreren Etagen übereinander angeordnet sein können. Das Mischwerkzeug 2 rotiert um die Achse B, die exzentrisch zur Behälterachse A angeordnet ist. Das Mischwerkzeug 2 wird von einem separaten Antriebsmotor mit einstellbarer Drehzahl im Drehzahlbereich von 200 bis 500 U/min angetrieben. In dem Mischgutbehälter 1 ist ferner ein stationärer Materialumlenker 4 vorgesehen. Der Boden 5 des Behälters weist eine Entleerungsöffnung 6 auf, die während des Mischens durch ein zentrales Bodenteil 5a verschlossen ist. Der Mischgutbehälter 1 und das Mischwerkzeug 2 werden, wie mit den Pfeilen C und D angedeutet, im gleichen Drehsinn angetrieben, so daß der Mischer nach dem Querstromprinzip arbeitet. Ein solcher Intensiv-Mischer ermöglicht dank des sich drehenden Mischgutbehälters eine freie Materialbewegung verbunden mit einer optimalen Homogenisierung innerhalb kürzester Mischzeit.

Das zum Anmischen benötigte Wasser wird auf eine Temperatur vorgewärmt, die in Abhängigkeit von der Temperatur der Feststoffe eine Temperatur der Wasser/Feststoff-Suspension von 20 bis 25°C ergibt, bevor die Schaum-Zugabe erfolgt. Diese Temperatur sollte maximal 25°C betragen, da die Schaumstabilität und -homogenität stark temperaturabhängig ist. Zu geringe Temperaturen verlängern die Reifezeit. Das vorgewärmte Wasser wird in dem Mischbehälter 1 dosiert. Die Feststoffe Quarzmehl, Kalkhydrat, Zement, Anhydrit und Rückgut werden nacheinander verwogen und ebenso wie das Siliconöl in den laufenden Mischer gegeben. Durch geeignete Drehzahl des Mischgutbehälters 1 mit etwa 20 U/min und des mit hoher Drehzahl im Bereich von 500 U/min angetriebenen Mischwerkzeuges 2 wird innerhalb von 20 bis 30 Sekunden eine intensive Mischung der Feststoffe und des Silicons mit dem Wasser herbeigeführt und es entsteht eine Wasser/Feststoff-Suspension.

Der Proteinschaum wird in einer Schaumkanone erzeugt und bei laufendem Mischer in diesen gegeben. Hierbei wird der Mischgutbehälter mit der gleichen Drehzahl angetrieben wie vorher, jedoch das Mischwerkzeug mit einer wesentlich geringeren Drehzahl im Bereich von 200 U/min. Die geringere Drehzahl des Mischwerkzeuges ist sehr wichtig, da sonst der Schaum zerstört wird. Weil das Siliconöl unter dem Einfluß der Mischbewegung ebenfalls zu einer Zerstörung des Schaumes führen würde sollte das Untermischen des Schaumes vom Beginn der Schaumzugabe an nicht länger als 120 Sekunden dauern. Die Rohmischung ist hoch viskos und muß bei Verwendung von Schnellzement, aufgrund der schnellen Erstarrung desselben, sofort und schnell in die Form gelangen. Das Entleeren des Mischers erfolgt über die Bodenöffnung 6 durch Öffnen des zentralen Bodenteiles 5a, von wo aus die Rohmischung über eine Schurre direkt in die Form eingefüllt wird.

Man läßt dann die Rohmischung in der Form ansteifen, was bei Portlandzement ca. 18 bis 24 Stunden, bei Schnellzement ca. 4 bis 6 Stunden dauert. Danach hat sich die Rohmischung zu einem plastischen Block verfestigt. Durch Anheben unter Anwendung von Vakuum wird der Block vom Formboden abgehoben, auf einen Härterost gesetzt und entformt. Der plastische Block weist eine ausreichende Grünstandsfestigkeit auf, so daß er anschließend mittels gespannter Drähte im grünen Zustand in einzelne Dämmplatten mit den gewünschten Abmessungen geschnitten werden kann. Die auf dem Härterost befindlichen Dämmplatten werden dann in einem Autoklav unter Sattdampfbedingungen gehärtet.

Nach dem Einbringen der Härteroste in den Autoklaven wird in diesem ein Unterdruck von -0,2 bis -0,5 bar erzeugt. Durch das Evakuieren kann die Masse schneller aufgewärmt und auf maximale Temperatur gebracht werden. Je intensiver die Vakuumbehandlung ist, um so geringer ist die Temperaturdifferenz zwischen dem Zentrum des Blockes und dem Dampfraum. Durch langsames Aufdampfen des Autoklaven werden Temperaturunterschiede zwischen inneren und äußeren Blockbereichen verringert, so daß Thermospannungen, die zu Rissen führen, vermieden werden. Als günstig hat sich eine zweistufige Aufheizrampe erwiesen, wobei im unteren Druckbereich ein kleiner Aufheizgradient notwendig ist, um ein Zerfließen bzw. Zerstören der Dämmplatten zu vermeiden. Mit Aufheizzeiten von ca. 4 Stunden ist eine rißfreie Härtung möglich. Zur Erhöhung der Verfahrenssicherheit beträgt die daran anschließende Haltezeit 8 Stunden bei einem Haltedruck von 11 bar. Da ein zu schnelles Abdampfen zu Härteschäden im Dämmaterial führt, sollte die Abdampfzeit bei 2 bis 4,5 Stunden liegen.

Die mit dem erfindungsgemäßen Verfahren herstellbaren leichten Dämmplatten haben eine Rohdichte unter 130 kg/m³ und bestehen im wesentlichen mineralogisch aus Tobermorit. Die Gesamtporosität beträgt über 90 Vol.-%, insbesondere 97 Vol.-%. Es wurde trotzdem eine verhältnismäßig hohe Druck- und Biegezugfestigkeit, insbesondere eine hohe Zugfestigkeit erreicht. Unter Verwendung von Portlandzement und auch von Schnellzement wurden Dämmplatten mit folgenden Werten hergestellt:

| | |
|---|---|
| Rohdichte kg/m³ | 100 - 120 |
| Druckfestigkeit N/mm² | 0,5 - 0,6 |
| Zugfestigkeit N/mm² | 0,07 - 0,09 |
| Wärmeleitfähigkeit W/mK | 0,04 |

## Patentansprüche

1. Verfahren zur Herstellung einer leichten, offenporigen, mineralischen Dämmplatte mit einer Rohdichte unter 130 kg/m³, mit folgenden Schritten:
a) Herstellen einer Wasser/Feststoff-Suspension durch intensives Mischen der nachstehenden Rohstoffe in einem Intensiv-Mischer mit drehendem Mischgutbehälter und mit hoher Drehzahl rotierendem Mischwerkzeug unter Verwendung von Wasser und, jeweils bezogen auf den Gesamtfeststoffgehalt, 40 bis 48 M.-% (Masse - Prozent) Quarzmehl mit einer spezifischen Oberfläche nach BET von mindestens 2,5 m²/g, 15 bis 20 M.-% Kalkhydrat mit einer spezifischen Oberfläche von mindestens 15 m²/g, 25 bis 35 M.-% Zement, 0,3 bis 0,5 M.-% Hydrophobiermittel, Rest Additive, wobei das Verhältnis von Zement zu Kalkhydrat 1,5 bis 2,3 : 1 beträgt, der Bindemittelanteil im Bereich von 45 bis 52 M.-% liegt und die Suspension einen Wasser/Feststoff-Faktor (ohne Schaum) von 0,7 bis 1,2 aufweist,
b) Bereitstellen eines Schaumes aus Wasser, Luft und einem Porenbildner mit einer Rohdichte von 40 bis 50 kg/m³,
c) Einleiten des Schaumes in die noch im Mischgutbehältnis befindliche Wasser/Feststoff-Suspension bei laufendem Intensiv-Mischer und Untermischen des Schaumes bei niedriger Drehzahl des Mischwerkzeuges in maximal 120 Sekunden,
d) Eingießen der Rohmischung in mindestens eine Form,
e) Ansteifenlassen der Rohmischung zu einem noch plastischen Block mit ausreichender Grünstandsfestigkeit,
f) Anheben des plastischen Blockes vom Formboden mittels Vakuum,
g) Schneiden des Blockes mittels Drähten in einzelne Dämmplatten und
h) Härten der Dämmplatten in einem Autoklaven.

2. Verfahren nach Anspruch 1, bei dem Quarzmehl mit einer spezifischen Oberfläche nach BET von 3 bis 5 m²/g verwendet wird.

3. Verfahren nach Anspruch 1, bei dem ein Verhältnis von Zement zu Kalkhydrat von 2,0 : 1 verwendet wird.

4. Verfahren nach Anspruch 1, bei dem der Bindemittelanteil etwa 50 M.-% beträgt.

5. Verfahren nach Anspruch 1, bei dem eine Wasser/Feststoff-Suspension mit einem Wasser/Feststoff-Faktor von etwa 0,7 bis 0,9 verwendet wird.

6. Verfahren nach Anspruch 1, bei dem als Zement Portlandzement verwendet wird.

7. Verfahren nach Anspruch 1, bei dem als Zement Schnellzement verwendet wird, der reaktive Aluminate enthält.

8. Verfahren nach Anspruch 1, bei dem als Schaum ein Tensidschaum, insbesondere ein Proteinschaum, verwendet wird.

9. Verfahren nach Anspruch 1, bei dem die Temperatur des zur Herstellung der Wasser/Feststoff-Suspension verwendeten Wassers in Abhängigkeit von der Temperatur der Feststoffe so gewählt wird, daß die Wasser/Feststoff-Suspension vor der Schaumzugabe eine Temperatur von 20 bis 25°C hat.

10. Verfahren nach Anspruch 1, bei dem der Rohmischung als Hydrophobiermittel Siliconöl zugesetzt wird.

11. Verfahren nach Anspruch 10, bei dem Wasser/Feststoff-Suspension etwa 0,4 M.-% Siliconöl zugesetzt wird.

12. Verfahren nach Anspruch 1, bei dem ein Intensiv-Mischer verwendet wird, bei welchem das unabhängig von dem Mischgutbehälter antreibbare Mischwerkzeug exzentrisch zur Drehachse des Mischgutbehälters angeordnet ist.

13. Verfahren nach Anspruch 1 oder 10, bei dem das Einleiten des Schaumes in das untere Drittel des Mischgutbehälters erfolgt.

14. Verfahren nach Anspruch 1, bei dem das Eingießen der Rohmischung in die Form vom Intensiv-Mischer direkt über eine Schurre erfolgt.

## Claims

1. A method of manufacturing a light, open-pored, mineral insulating board with a gross density below 130 kg/m³, with the following steps:
a) producing a water-solids suspension by intensive mixing of the following raw materials in an intensive mixer with a rotating mix container and a mixer mechanism rotating at a higher speed, using water and, in each case referred to the total content of solids, 40 to 48 M% (mass percent) quartz flour with a specific surface according to BET of at least 2.5 m²/g, 15 to 20 M% slaked lime with a specific surface of at least 15 m²/g, 25 to 35 M% cement, 0.3 to 0.5 M% hydrophobic medium, the rest additives, wherein the ratio of cement to slaked lime amounts to 1.5 to 2.3 : 1, the binder proportion lies in the range from 45 to 52 M% and the suspension has a water/solids factor (without foam) from 0.7 to 1.2,
b) preparing a foam from water, air and a pore former, with a gross density from 40 to 50 kg/m³,
c) introducing the foam into the water/solids suspension still present in the mix container with the intensive mixer running and mixing in the foam at a lower speed of rotation ofthe mixer mechanism within 120 seconds at the most,
d) pouring the raw mix into at least one mould,
e) allowing the raw mix to set to a still plastic block with sufficient green-state strength,
f) lifting the plastic block off the mould bottom by means of a vacuum,
g) cutting the block into individual insulating boards by means of wires and
h) hardening the insulating boards in an autoclave.

2. A method according to claim 1, in which quartz flour with a specific surface according to BET of 3 to 5 m²/g is employed.

3. A method according to claim 1, in which a ratio of cement to slaked lime of 2.0 : 1 is employed.

4. A method according to claim 1, in which the binder proportion amounts to about 50 M%.

5. A method according to claim 1, in which a water/solids suspension with a water/solids factor of about 0.7 to 0.9 is employed.

6. A method according to claim 1, in which Portland cement is used as the cement.

7. A method according to claim 1, in which a quick setting cement containing reactive aluminate is used as the cement.

8. A method according to claim 1, in which a surfactant foam, especially a protein foam, is employed as the foam.

9. A method according to claim 1, in which the temperature of the water used to produce the water/solids suspension is so selected in dependence on the temperature of the solids that the water/solids suspension has a temperature from 20 to 25°C before the addition of foam.

10. A method according to claim 1, in which silicone oil is added to the raw mix as the hydrophobic medium.

11. A method according to claim 10, in which about 0.4 M% silicone oil is added to the water/solids suspension.

12. A method according to claim 1, in which an intensive mixer is employed in which the mixer mechanism drivable independently of the mix container is arranged eccentrically to the axis of rotation of the mix container.

13. A method according to claim 1 or 10, in which the foam is introduced to the lower third of the mix container.

14. A method according to claim 1, in which the pouring of the raw mix into the mould is effected directly from the intensive mixer through a chute.

## Revendications

1. Procédé de fabrication d'un panneau isolant minéral, léger et à alvéoles ouvertes, présentant une masse volumique apparente inférieure à 130 kg/m³, comprenant les étapes consistant à :
a) réaliser une suspension eau/solides par mélange intime des matières premières suivantes dans un mélangeur intensif pourvu d'un bac de mélange rotatif et d'un outil mélangeur rotatif tournant à vitesse élevée, en utilisant de l'eau et, se rapportant chaque fois à la teneur totale en solides, 40 à 48 % en masse de poudre de quartz présentant une surface spécifique selon B.E.T. au moins égale à 2,5 m²/g, 15 à 20 % en masse de chaux hydratée présentant une surface spécifique au moins égale à 15 m²/g, 25 à 35 % en masse de ciment, 0,3 à 0,5 % en masse d'agent imperméabilisant, le reste d'additifs, dans laquelle le rapport entre ciment et chaux hydratée est compris entre 1,5 et 2,3:1, la proportion de liant est comprise dans la gamme allant de 45 à 52 % en masse et la suspension présente un facteur eau/solides (sans mousse) compris entre 0,7 et 1,2,
b) préparer une mousse à partir d'eau, d'air et d'un agent porogène présentant une masse volumique apparente comprise entre 40 et 50 kg/m³,
c) introduire la mousse dans la suspension eau/solides se trouvant encore dans le bac de mélange alors que le mélangeur intensif tourne, et mélanger la mousse, en utilisant une vitesse de rotation plus faible de l'outil mélangeur, en 120 secondes maximum,
d) couler le mélange brut dans au moins un moule,
e) laisser le mélange brut prendre en un bloc encore plastique présentant une tenue à vert suffisante,
f) soulever le bloc plastique du fond du moule en utilisant du vide,
g) découper le bloc en plaques isolantes au moyen de fils métalliques, et
h) durcir les plaques isolantes dans un autoclave.

2. Procédé selon la revendication 1, dans lequel on utilise de la poudre de quartz présentant une surface spécifique selon B.E.T. comprise entre 3 et 5 m²/g.

3. Procédé selon la revendication 1, dans lequel on utilise un rapport entre ciment et chaux hydratée égal à 2,0:1.

4. Procédé selon la revendication 1, dans lequel la proportion de liant est environ égale à 50 % en masse.

5. Procédé selon la revendication 1, dans lequel on utilise une suspension eau/solides présentant un facteur eau/solides compris entre environ 0,7 et 0,9.

6. Procédé selon la revendication 1, dans lequel on utilise comme ciment du ciment portland.

7. Procédé selon la revendication 1, dans lequel on utilise comme ciment du ciment à prise rapide, qui contient de l'aluminate réactif.

8. Procédé selon la revendication 1, dans lequel on utilise comme mousse une mousse tensioactive, particulièrement une mousse à base de protéines.

9. Procédé selon la revendication 1, dans lequel la température de l'eau utilisée pour réaliser la suspension eau/solides est sélectionnée en fonction de la température des solides de façon telle que la suspension eau/solides présente une température comprise entre 20 et 25 °C avant l'ajout de la mousse.

10. Procédé selon la revendication 1, dans lequel on ajoute au mélange brut de l'huile de silicone en tant qu'agent imperméabilisant.

11. Procédé selon la revendication 10, dans lequel on ajoute à la suspension eau/solides environ 0,4 % en masse d'huile de silicone.

12. Procédé selon la revendication 1, dans lequel on utilise un mélangeur intensif dans lequel l'outil de mélange pouvant être commandé indépendamment du bac de mélange est disposé excentriquement par rapport à l'axe de rotation du bac de mélange.

13. Procédé selon la revendication 1 ou 10, dans lequel l'introduction de la mousse est réalisée dans le tiers inférieur du bac de mélange.

14. Procédé selon la revendication 1, dans lequel la coulée en moule du mélange brut est réalisée depuis le mélangeur intensif directement par le biais d'une goulotte.
